# EUROPEAN PATENT APPLICATION

(11) **EP 4 691 906 A1**
(43) Date of publication of application: **11.02.2026**
(21) Application number: 25192748.9
(22) Date of filing: 30.07.2025
(51) Int. Cl.: B64C 1/36, B64D 37/04, B64D 37/30, H01Q 1/28

(54) **HYDROGEN-POWERED AIRCRAFT WITH ANTENNA FOR SATELLITE INTERNET ACCESS**

(30) Priority: 07.08.2024 DE 102024122482
(71) Applicant: AIRBUS Operations GmbH, 21129 Hamburg (DE)
(72) Inventor: Siemann, Martin, 21129 Hamburg (DE); Banavas, Alexander, 21129 Hamburg (DE)
(74) Representative: Marschall, Stefan

(57) **Abstract**

Disclosed is a hydrogen-powered aircraft 100₁, 100₂, 100₃, 100₄, 100₅, 100₆ comprising a fuselage 10₁, 10₂, 10₃, 10₄, 10₅, 10₆ with an unpressurised aft portion A containing or configured to contain at least one hydrogen tank 11, 12. A roof portion R of the fuselage 10₁, 10₂, 10₃, 10₄, 10₅, 10₆ at least partially covers the unpressurised aft portion A and integrates an antenna 13 for satellite internet access from within the aircraft.

## Description

The present invention concerns a hydrogen-powered aircraft comprising a fuselage with an unpressurised aft portion including at least one hydrogen tank.

Modern aircraft, which are conventionally fuelled with an aviation gasoline or a jet fuel, for instance, often provide in-flight internet access to the respective crew and/or passengers. To realise such access even distant from ground-based stations, such as when flying over an ocean, satellites are typically involved.

While other antennas are known to be installed, in such conventional aircraft, flush with a surface of a fuselage of the aircraft, as taught e.g. in US 2022 216 601 A1 and EP 3 560 817 A1, due to their significantly larger size, antennas enabling satellite internet access providing an acceptable data rate are typically arranged on top of the aircraft's fuselage under a hump-shaped cover. To be prepared for potential rapid decompression cases, such radomes often exhibit ventilation holes.

However, the hump causes aerodynamic drag and thus lowers the aircraft's performance. It also adds operational risk, such as due to potential bird strike or air vortices. Moreover, the antenna position on top of the fuselage increases the risk of corrosion due to humidity and necessary de-icing fluids entering the ventilation holes.

In order to achieve a considerable emission reduction, hydrogen/electric aircraft engines have emerged as a promising possibility, for instance. In particular, turbo fans and fuel cells/ electric engines respectively powered by hydrogen are being developed as aircraft engines.

It is an object of the present invention to provide such hydrogen-powered aircraft with an antenna for satellite internet access.

The object is achieved with a hydrogen-powered aircraft according to claim 1. Advantageous embodiments are disclosed in the dependent claims, the description, and the figures.

A hydrogen-powered aircraft according to the present invention comprises a fuselage with an unpressurised aft portion containing or configured to contain at least one hydrogen tank. The hydrogen-powered aircraft further comprises an antenna enabling satellite internet access from within the hydrogen-powered aircraft.

Said antenna is integrated in a roof portion of the fuselage, the roof portion at least partially covering the unpressurised aft portion; in an orientation of the hydrogen-powered aircraft which is designated for horizontal flight, an outer surface (being exposed to an environment of the hydrogen-powered aircraft) of the "roof portion" thus faces (vertically or slopingly) upwards.

As further to be understood, the term "aft" relates to a designated direction of flight of the aircraft; in particular, the hydrogen tank/s are installed or configured to be installed in a caudal configuration.

Moreover, in this document, when the respective relation is clear, the attribute "hydrogen-powered" referring to the aircraft and the defining clause "enabling satellite internet access from within the hydrogen-powered aircraft" relating to the antenna are sometimes at least partially omitted to improve legibility. Expressions referring to a position in or on the aircraft, or to a surrounding thereof, such as "top" or "lateral" or "upwards", relate to its said orientation designated for normal horizontal flight.

The inventive integration of the antenna in the roof portion covering the unpressurised aft portion designated to contain the hydrogen tank/s facilitates an advantageous space management taking advantage of the architecture of hydrogen-powered aircraft. Indeed, such hydrogen-powered aircraft permits a reinforcement structure which is broader than in conventional aircraft. In particular, the antenna can advantageously be arranged with sufficient distance to obstacles (such as frames) impairing the signal transmission and at the same time close to further internet equipment such as to an onboard server and/or to a router, thereby avoiding loss of bandwidth. Moreover, in the roof portion covering the unpressurised aft portion, the antenna has a clear line of sight with different satellite constellation (such as those known as Low Earth Orbit LEO, Medium Earth Orbit MEO, or Geostationary Earth Orbit GEO) and nonetheless does not conflict with systems associated to the pressurised passenger cabin, such as with a ducting of a cabin air distribution.

The antenna is preferably at least partially countersunk in the roof portion, e.g., such as to protrude from an outer surface of the fuselage (in the roof portion) by at most 2cm or at most 1cm, or such as to not protrude from said outer surface. Thereby, an aerodynamic drag of the antenna and a risk of a bird strike (and a resulting loss of the antenna) can be avoided or at least reduced. Due to loads acting on the antenna arrangement (e.g., aerodynamic loads) thus being lowered, a particularly lightweight structural integration is facilitated.

Moreover, a susceptibility to corrosion of the antenna of such embodiment is reduced, as its embedding into the roof portion provides for a protection against affecting substances such as water and/or de-icing liquids, and as ventilation holes for rapid decompression cases are dispensable in the roof portion covering the unpressurised aft portion.

Preferably, the antenna is covered by a skin at least partially made of glass fibre reinforced plastic. Such skin, whose surface facing away from the antenna preferably is a section of an outer surface of the fuselage (thus being directly exposed to a surrounding of the aircraft), may protect the antenna from impact coming from an environment of the aircraft and nonetheless allow signals (transferred between the antenna and a satellite) to pass through. Preferably, an outer surface of said skin is arranged flush (thus, on a common level/ without step) or at least substantially flush with its surrounding region.

Additionally or alternatively, the antenna may be integrated in a panel releasably closing an opening of the fuselage (thus in particular formed in an outer surface thereof). The opening may be delimited to the roof portion (and thus entirely face upwards); in such case, the antenna may be located in a centre region of the panel. Alternatively, the opening may extend to a lateral portion and/or even a bottom portion of the fuselage (thus comprise a region facing sideways and/or even downwards); in such case, the antenna may be positioned in an edge region of the panel.

According to advantageous embodiments, the opening may be formed in a shell of the fuselage; such shell typically is reinforced by a fuselage reinforcement system comprising a plurality of stringers extending in a longitudinal direction of the fuselage, and a plurality of frames crossing the stringers, as known in the art.

The panel may be configured as a door which is swivelling relative to an edge of the opening, or it may be is detachable therefrom as a separate component, for instance.

Such embodiments facilitate an easy installation and maintenance of the antenna. The opening may be dedicated for purposes related to the antenna (such as installing it and accessing its contacts), or it may have at least one further function.

For example, the opening may provide access, from an environment of the fuselage to an interior thereof, in particular to the unpressurised aft portion thereof, more specifically, to the at least one hydrogen tank and/or to a fuel distribution system configured to supply hydrogen from the at least one hydrogen tank to a combustion chamber of an engine or to a fuel cell of the aircraft; such fuel distribution system may advantageously be located underneath the opening.

These embodiments thus facilitate performing respective maintenance operations, through the opening.

In particular, in embodiments where the unpressurised aft portion includes two hydrogen tanks arranged with an interspace in-between (in particular in a caudal tandem configuration), the opening may be arranged at least partially above the interspace; accordingly, when closing the opening, the panel may at least partially cover the interspace. This facilitates an easy access to both fuel tanks, wherein no space consuming passage along them is needed.

According to particular advantageous embodiments, the opening may be configured as a tank port for selectively extracting or installing the at least one hydrogen tank.

The panel may be entirely or at least partially made of glass fibre reinforced plastic. Therein, the antenna may be at least partially embedded in the glass fibre reinforced plastic (in particular, encased by it) and/or at least partially attached to a surface thereof. Such embodiments facilitate an easy panel manufacture enabling a signal transmission to and from the antenna.

According to specific embodiments, the panel may include a sub-panel made of glass fibre reinforced plastic, wherein at least a portion of the antenna is attached to the sub-panel and/or wherein at least a portion of the antenna is embedded (e.g., being encased in the glass fibre reinforced plastic) in the sub-panel. Such sub-panel being a first panel component may be combined to one or various further panel component/s the panel may also comprise. For instance, said sub-panel may be entirely or at least partially surrounded by at least one of the one or various further panel component/s. In particular, the panel with the sub-panel may thus implement a (sub-)panel-in-panel concept. The sub-panel may be detachable from the further component/s, thus facilitating easy maintenance operations on the antenna.

The one or various further panel component/s in such embodiments may at least partially be made of a material different from glass fibre reinforced plastic, e.g., of metal (in particular, aluminium) and/or a carbon fibre reinforced plastic, for instance. Such embodiments allow for a particularly high strength of the panel which is in particular advantageous when the opening - and thus also the panel - is large, e.g. to facilitate a respective further functionality such as an extraction or installation of the at least one fuel tank through the opening.

As mentioned above, with regard to an aircraft orientation which is designated for normal horizontal flight, the roof portion by definition has an outer surface (exposed to an environment of the hydrogen-powered aircraft) which faces (vertically or slopingly) upwards.

Therein, at least a portion of said outer surface of the roof portion may form part of a surface of a/the shell of the fuselage, the shell fastened to a reinforcement structure (comprising frames and stringers as mentioned above) of the fuselage.

Additionally or alternatively, the roof portion may comprise a fairing at least partially made of glass fibre reinforced plastic and at least partially covering a portion of the shell (fastened to a reinforcement structure of the fuselage). Therein, at least a portion of a hydrogen distribution system and/or of a ventilation system may respectively be comprised by the roof portion and arranged between said portion of the shell and the fairing.

In such embodiments, a surface of the fairing may form at least a portion of said outer surface of the roof portion. The antenna may be integrated in said fairing. In particular, the antenna may be at least partially embedded in the fairing (such as encased therein), in particular in a portion thereof which is made of glass fibre reinforced plastic, and/or at least partially be arranged between said portion of the shell and the fairing, in particular underneath a portion thereof which is made of glass fibre reinforced plastic.

At least a portion of the antenna may be arranged between two channels which may be at least partially formed within the roof portion and which may contain at least a part of a respective hydrogen transport pipe of the distribution system and/or of the ventilation system, respectively. Such embodiments allow for a particularly space-saving arrangement of the antenna. In respective regions covering the channels, the fairing may have ventilation holes allowing a purging of hydrogen in the potential case of leakage, as taught in US 2023/ 0086167 A1 and US 2023/ 0382551 A1.

In what follows, preferred embodiments of the present invention are explained with respect to the accompanying drawings. As is to be understood, the various elements and components are depicted as examples only, may be facultative and/or combined in a manner different than that depicted. Reference signs for related elements are used comprehensively and not defined again for each figure, and the same holds for analogies which are visually evident.

Shown is schematically in
- Fig. 1:: a part of a first exemplary embodiment of a hydrogen-powered aircraft according to the present invention;
- Fig. 2:: a part of a second exemplary embodiment of a hydrogen-powered aircraft according to the present invention;
- Fig. 3:: a part of a third exemplary embodiment of a hydrogen-powered aircraft according to the present invention;
- Fig. 4:: a part of a fourth exemplary embodiment of a hydrogen-powered aircraft according to the present invention;
- Fig. 5:: a part of a fifth exemplary embodiment of a hydrogen-powered aircraft according to the present invention; and
- Fig. 6:: a part of a sixth exemplary embodiment of a hydrogen-powered aircraft according to the present invention in a cross section.

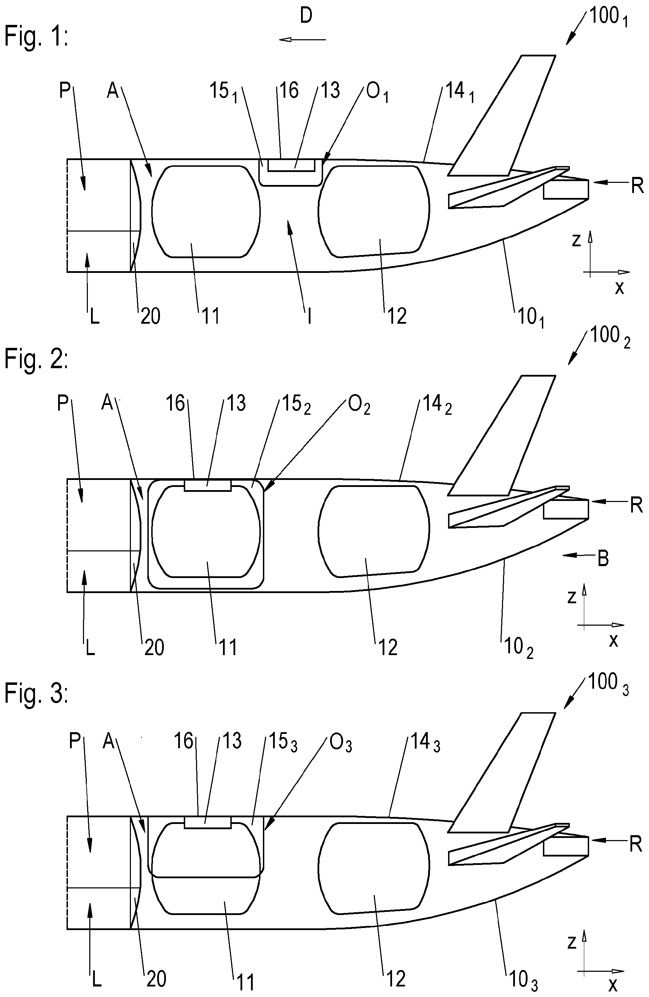

In Figure 1, a part of a hydrogen-powered aircraft 100₁ according to an exemplary embodiment of the present invention is schematically shown in schematic side view providing insight into a section of a fuselage 10₁ of the aircraft 100₁. As indicated by a coordinate system, an image plane thus corresponds to an x-z-plane, where x runs opposite to a designated direction D of flight, and z runs upwards. The aircraft 100₁ is depicted in an orientation designated for normal horizontal flight.

As apparent from Figure 1, the fuselage 10₁ comprises an unpressurised aft portion A and, separated therefrom by a pressure bulkhead 20, a pressurised passenger cabin P and a cargo area L.

The unpressurised aft portion A includes two hydrogen tanks 11, 12 which are arranged in a caudal tandem configuration. A roof portion R covers the unpressurised aft portion A upwards. In the present case, its outer surface (exposed to an environment of the hydrogen-powered aircraft) forms part of a surface of a shell 14₁ of the fuselage; the shell 14₁ is fastened to a fuselage reinforcement structure (not shown) as known in the art.

Integrated in the roof portion R, the aircraft 100₁ further comprises an antenna 13 for satellite internet access from within the aircraft. In the embodiment depicted in Figure 1, the antenna 13 is countersunk in a panel 15₁ releasably closing an opening O₁ of the fuselage 10₁ (and formed in the shell 14₁); in the situation shown in Figure 1, the panel 15₁ closes the opening O₁. It may be configured as a swivelling door or as a detachable separate component (not visible).

The antenna 13 is arranged in a top region of the roof portion R, which ensures a clear line of sight with different satellite constellations. It is protected against exterior impacts by a skin 16 whose surface facing away from the antenna 13 forms a portion of an exterior surface of the fuselage 10₁, in particular, of the roof portion R thereof. An outer surface of the skin 16 is arranged flush with its surrounding; accordingly, neither the antenna nor the skin protrudes from the outer surface of the fuselage. Thereby, an aerodynamic drag of the antenna and a risk of a bird strike (and a resulting loss of the antenna) is avoided. To allow signals to pass through, the skin 16 is made of glass fibre reinforced plastic (not visible).

In the present case, the opening O₁ provides access from an environment of the fuselage 10₁ to the unpressurised aft portion A thereof. In particular, the opening O₁ is arranged above an interspace I arranged between the tanks 11, 12. It thereby in particular facilitates easy access to both hydrogen tanks 11, 12 and to a related distribution system (not shown), such as for maintenance operations. Accordingly, the panel 15₁ not only serves to hold the antenna 13, but has a multiple function.

Figures 2 and 3 show respective parts of a hydrogen-powered aircrafts 100₂, 100₃ according to a second and a third embodiment of the present invention, respectively. In case of Figure 2, an antenna 13 is embedded in a panel 15₂ releasably closing an opening O₂ formed in a shell 14₂ of a fuselage 10₂. Analogously, in case of Figure 3, an antenna 13 is embedded in a panel 15₃ releasably closing an opening O₃ formed in a shell 14₃ of a fuselage 10₃.

Contrary to the embodiment shown in Figure 1, the openings O₂ and O₃ of the embodiments shown in Figure 2 and 3 each are configured as a tank port for selectively extracting or installing the at least one hydrogen tank 11, 12. Therein, the opening O₂ extends to a bottom portion B of the fuselage 10₂ (thus facilitating a lateral tank installation and tank extraction), and the antenna 13 is located in an edge region of the panel 15₂.

By contrast, the opening O₃ shown in Figure 3 entirely faces upwards (thus being designed for tank installing and extracting from/to above). Therein, although not visible in Figure 3, the opening O₃ may preferably be symmetric to a plane extending along a longitudinal centre axis of the fuselage 10₃ in the x-z-directions, such that a view from the other side (in the other direction) is laterally reversed to that provided by Figure 3. In this embodiment, the antenna 13 may thus be positioned in a centre region of the panel 15₃.

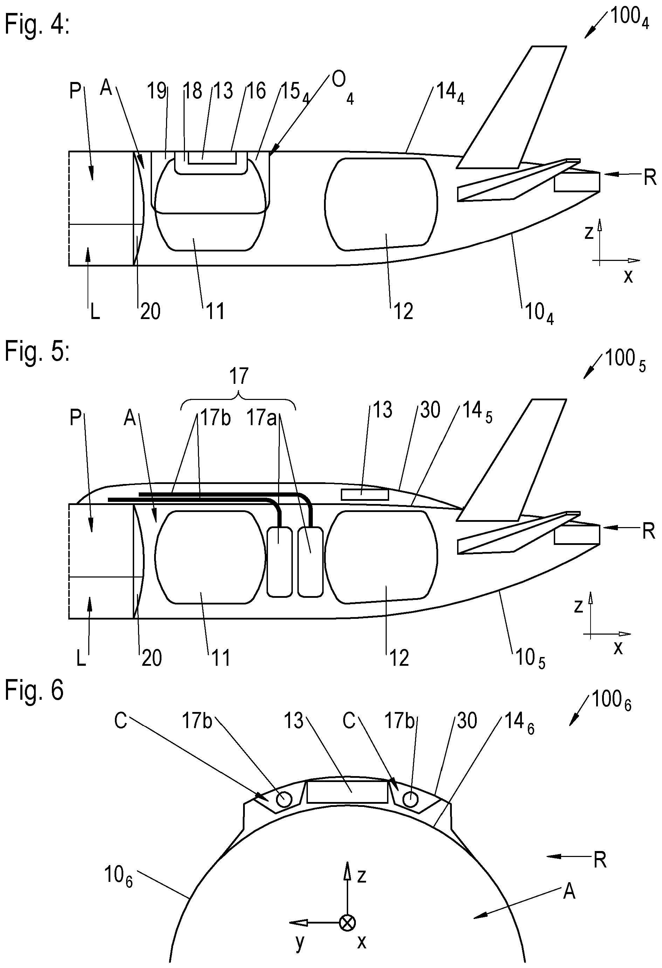

In Figure 4, a part of a hydrogen-powered aircraft 100₄ according to a fourth embodiment of the present invention is shown. Analogous to the embodiment depicted in Figure 3, an antenna 13 is embedded in a panel 15₄ releasably closing an opening O₄ formed in a shell 14₄ of a fuselage 10₄ and serving as a tank port for tank installation and extraction from above.

Therein, contrary to the embodiment shown in Figure 3, the antenna 13 of the embodiment depicted in Figure 4 is embedded in a sub-panel 18 included in the panel 15₄, the sub-panel 18 made of glass fibre reinforced plastic, which enables signals respectively coming from or transmitted to the antenna 13 to pass through. A further component 19 of the panel 15₄ preferably is at least partially made of a different material such as aluminium and/or carbon fibre reinforced plastic. Thereby, a high strength of the panel 15₄ particularly in regard of its size can be achieved. In particular, such embodiment thus implements a panel-in-panel concept.

The sub-panel 18 may be entirely surrounded by the further component 19 of the panel 15₄ (not visible due to the perspective).

Figure 5 illustrates a part of a hydrogen-powered aircraft 100₅ according to a fifth embodiment of the present invention. In this case, the roof portion R of the fuselage 10₅ comprises a fairing 30 covering the antenna 13 and a portion of a shell 14₅ of the fuselage 10₅. The fairing 30 preferably is at least partially made of glass fibre reinforced plastic, in particular in a region above the antenna 13. Accordingly, the fairing 30 may form a skin covering the antenna 13 and being made of glass fibre reinforced plastic enabling signals to pass through.

As further apparent from Figure 5, the roof portion R includes pipes 17b of a hydrogen distribution system 17 further comprising tank operation systems 17a respectively connected to the tanks 11, 12.

The pipes 17b may advantageously run through respective channels C, as illustrated in Figure 6 showing a hydrogen-powered aircraft 100₆ according to a further embodiment of the present invention in a cross section orthogonally to a longitudinal direction of the fuselage 10₆ of the aircraft 100₆ (thus, in a y-z-plane).

In this case, an antenna 13 is arranged between the channels C each comprising at least a portion of a respective pipe 17b positioned between a fairing 30 and a shell 14₆ of the fuselage 10₆. In regions covering the channels C, the fairing 30 may advantageously have ventilation holes (not shown), such that the channels C provide for a leakage safety system; as mentioned above, the provision of such pipes within such channels covered by a fairing having ventilation holes is known from documents US 2023/ 0086167 A1 and US 2023/ 0382551 A1. The inventive positioning of the antenna 13 between the channels C in such embodiments facilitates a particularly compact arrangement of the aircraft.

Disclosed is a hydrogen-powered aircraft 100₁, 100₂, 100₃, 100₄, 100₅, 100₆ comprising a fuselage 10₁, 10₂, 10₃, 10₄, 10₅, 10₆ with an unpressurised aft portion A containing or configured to contain at least one hydrogen tank 11, 12. A roof portion R of the fuselage 10₁, 10₂, 10₃, 10₄, 10₅, 10₆ at least partially covers the unpressurised aft portion A and integrates an antenna 13 for satellite internet access from within the aircraft.

### Reference signs

10₁, 10₂, 10₃, 10₄, 10₅, 10₆ fuselage
11 hydrogen tank
12 hydrogen tank
13 antenna for satellite internet access
14₁, 14₂, 14₃, 14₄, 14₅, 14₆ shell
15₁, 15₂, 15₃, 15₄ panel
16 skin of glass fibre reinforced plastic
17 hydrogen distribution system
17a tank operation system
17b hydrogen transport pipe
18 sub-panel made of glass fibre reinforced plastic
   - 20: pressure bulkhead

   - 30: fairing
100₁, 100₂, 100₃, 100₄, 100₅, 100₆aircraft
   - A: unpressurised aft section
   - C: channel
   - D: designated direction of flight
   - I: interspace between tanks
   - L: cargo area
   - O₁, O₂, O₃, O₄: opening
   - P: passenger cabin

## Claims

1. Hydrogen-powered aircraft (100₁, 100₂, 100₃, 100₄, 100₅, 100₆) comprising a fuselage (10₁, 10₂, 10₃, 10₄, 10₅, 10₆) with an unpressurised aft portion (A) containing or configured to contain at least one hydrogen tank (11, 12),
wherein an antenna (13) for satellite internet access from within the aircraft is integrated in a roof portion (R), of the fuselage (10₁, 10₂, 10₃, 10₄, 10₅, 10₆), at least partially covering the unpressurised aft portion (A).

2. Hydrogen-powered aircraft according to claim 1, wherein said antenna (13) is at least partially or entirely countersunk in the roof portion (R).

3. Hydrogen-powered aircraft according to one of claims 1 or 2, wherein said antenna (13) is covered by a skin (16, 30) at least partially made of glass fibre reinforced plastic.

4. Hydrogen-powered aircraft according to one of the preceding claims, wherein said antenna is integrated in a panel (15₁, 15₂, 15₃, 15₄) releasably closing an opening (O₁, O₂, O₃, O₄) of the fuselage (10₁, 10₂, 10₃, 10₄).

5. Hydrogen-powered aircraft according to claim 4, wherein the opening (O₁, O₂, O₃, O₄) provides access to the at least one hydrogen tank (11, 12) and/or to a fuel distribution system (17) configured to supply hydrogen from the at least one hydrogen tank (11, 12) to a combustion chamber of an engine or to a fuel cell of the aircraft.

6. Hydrogen-powered aircraft according to one of claims 4 or 5, wherein the opening (O₂, O₃, O₄) is configured as a tank port for selectively extracting or installing the at least one hydrogen tank (11, 12).

7. Hydrogen-powered aircraft according to one of claims 4 to 6, wherein the unpressurised aft portion (A) includes two hydrogen tanks (11, 12) with an interspace (I) in-between, the interspace (I) at least partially covered by said panel (15₁).

8. Hydrogen-powered aircraft according to one of claims 4 to 7, wherein the antenna (13) is at least partially attached to and/or at least partially embedded in a sub-panel (18) made of glass fibre reinforced plastic and included in said panel (15₄).

9. Hydrogen-powered aircraft according to one of claims 4 to 8, wherein an outer surface of the roof portion (R) is entirely or at least partially formed by a portion of a shell (14₁, 14₂, 14₃, 14₄) fastened to a reinforcement structure of the fuselage (10₁, 10₂, 10₃, 10₄).

10. Hydrogen-powered aircraft according to one of the preceding claims, wherein the roof portion (R) comprises a fairing (30) at least partially made of glass fibre reinforced plastic and at least partially covering the antenna (13) and a portion of a shell (14₅, 14₆) of the fuselage (10₅, 10₆).

11. Hydrogen-powered aircraft according claim 10, wherein the roof portion (R) further comprises at least a portion of a hydrogen distribution system (17) and/or of a ventilation system arranged between the fairing (30) and the shell (14₅, 14₆).

12. Hydrogen-powered aircraft according claim 11, wherein at least a portion of the antenna is arranged between two channels (C) at least partially formed in the roof portion (R) and containing at least a part of a respective hydrogen transport pipe (17b) of the distribution system (17) and/or of the ventilation system, respectively.
